# EUROPEAN PATENT APPLICATION

(11) **EP 1 247 697 A2**
(43) Date of publication of application: **09.10.2002**
(21) Application number: 02006986.0
(22) Date of filing: 27.03.2002
(51) Int. Cl.: B60R 16/02

(54) **Rotary loop back connector**

(30) Priority: 03.04.2001 EP 01108348
(71) Applicant: Tyco Electronics AMP GmbH, 64625 Bensheim (DE)
(72) Inventor: Pfeifer, Hans-Dieter, 64625 Bensheim (DE); Will, Johannes, 76646 Bruchsal (DE)
(74) Representative: Heinz-Schäfer, Marion

(57) **Abstract**

A rotary loop back connector (10) comprises a rotor and a stator defining a cable holding space (20) therebetween, the rotor (16) and stator (18) having portions relatively movable with respect to each other. In a preferred application, the rotary connector (10) is used to establish electrical connections through the steering unit of an automobile. The stator (18) is fixed to the steering column and remains stationary therewith while the rotor (16) rotates with the turning of the steering wheel. The rotary connector (10) includes a cable holder (20) accommodated in the stator (18) within the holding space, the cable holder being rotatable with respect to both the stator (16) and rotor (18). A flat cable is supported by the cable holder (20), the cable having a first end fixed to the stator (16) and a second end fixed to the rotor (18). A plurality of spring biased spacers (36) are positioned between the stator (16) and rotor (18) for urging the cable holder (20) against the stator (16) to thereby maintain the cable holder (20) in movable contact therewith upon movement of the rotary connector (10) and operation of the automobile. As such, vibratory movement of the cable holder (20) in the rotary connector (10) and resultant noise therefrom are substantially eliminated.

## Description

The present invention relates generally to a rotary loop back connector which may be incorporated into a vehicle steering unit to establish electrical interconnection therethrough. More particularly, the present invention relates to a rotary connector for establishing electrical connection between components mounted on an automobile steering wheel and associated devices mounted elsewhere on the automobile.

It is commonly known to use rotary connectors to establish electrical connection through the steering unit of an automobile. These rotary connectors maintain interconnection through the steering unit, during the continual rotation of the unit's steering wheel. In order to maintain electrical connection despite such rotation, these rotary connectors typically include a fixed housing and a movable housing, wherein the movable housing is rotatably connected to the fixed housing. Flat electrical cable is generally stored in a holding space formed between the fixed housing and the movable housing. The flat cable is terminated at one end to a connector mounted in the fixed housing, and is also terminated at an opposed end to a connector mounted on the movable housing. The fixed housing is typically mounted to the steering column or shaft, while the movable housing is mounted to the steering wheel.

Rotary connectors of this type are commonly used to effect connection between the devices mounted directly on the steering wheel and associated devices mounted elsewhere on the automobile. One of the more common uses for these types of rotary connectors is to connect deployable airbags mounted in the steering wheel to associated sensors and control circuitry mounted at locations throughout the automobile which detect impact.

While airbag deployment is one common use for these rotary connectors, connectors may also establish electrical connection between other electronic devices commonly used in the automobile. For example, control of many automotive accessories, such as the audio system, cruise control and the like may be conveniently provided on the steering wheel. Also, it has become quite common to provide a temperature conditioned steering wheel, such as, for example, by heating or cooling. The electrical current necessary to control the temperature of the steering wheel may be provided through the rotary connector.

The art has seen the development of two types of rotary connectors. One type of connector, referred to generally as a clock spring connector, includes flat cable wound helically in a single direction (either clockwise or counter-clockwise) to form a coil. The coiled cable is supported within the holding space formed between the fixed housing and the movable housing. Continuous alternating rotation of the steering wheel with respect to the steering column effects winding and unwinding of the coiled flat cable, thus maintaining continuous electrical connection between the ends of the cable, notwithstanding the steering wheel rotation. An example of a clockspring connector is shown in U.S. Patent No. 5,529,505.

A second type of connector is referred to as a reversal type or loop back connector, in which one or more flat cables are partially wound in a first direction and then wound in a second reverse direction. Such reverse winding of the cables typically results in several loops of cable housed within the holding space between the fixed housing and the movable housing. The loop back connector employing cables having reverse windings greatly reduces the length of cable required to effect electrical connection through the rotating steering wheel. This enables the loop back connector to accommodate both larger numbers of cables therein as well as cables having larger cross-sections for greater current capacity, which is desirable for certain functions such as for the steering wheel heater. An example of a reversal type loop back connector is shown in U.S. Patent No. 3,763,445.

It may be appreciated that with each of these rotary connectors, especially those of the loop back variety, numerous relatively movable parts must be housed within the steering wheel. Normal vibrations inherent in automobile operation can cause an undesirable rattling of the relatively movable components held in the steering wheel. This is commonly referred to as vibratory "noise." An attempt to address the problem of vibrating noise caused by the various components contacting each other within the connector is seen in U.S. Patent No. 5,882,216. That patent describes a reversal type rotating connector which fixes certain components to prevent contact or collision between the components and between the cables. The fixed and movable housings are supported in a manner which maintains them in spaced apart relation, thereby avoiding a collesion on contact therebetween.

However, in many reversal type rotary connectors, the cable itself may be supported on a movable platform or carrier supported within the holding space between the housings. Since the carrier is typically supported in movable fashion within the fixed lower housing, automobile vibration can also cause undesirable contact or collision between the carrier and the fixed housing. As the carrier is vertically movable within the holding space, such vibration can cause the carrier to repeatedly strike the fixed housing thereby causing a vibratory noise. Another approach at preventing such vibratory noise is described in U.S. Patent No. 5,637,005. The '005 patent shows the use of elastic arms to elastically bias a movable cable spacer away from surfaces defining the cable accommodating area in an effort to prevent contact and noise therebetween.

It is, therefore, desirable to provide a rotary connector which allows for the rotational movement of the components, permits rotation of the steering wheel, yet reduces the noise created by the vibration of certain relatively movable parts in the connector.

In accordance with one particular form of the invention, a rotary connector has a first housing and a second housing defining a cable holding space therebetween, the first and second housings being relatively rotatable. A cable holder is accommodated within the holding space, the cable holder being movably positioned with respect to the second housing. A flat cable supported by the cable holder is disposed within the holding space, the cable having a first end fixed to the first housing and second end fixed to the second housing for relative movement therebetween. At least one spring biased member is movably supported by the cable holder. The spring biased member engages the first housing and urges the cable holder against the second housing to maintain the cable holder in movable contact therewith upon vibrating movement of the rotary connector.

In accordance with a specific aspect of the invention, the spring biased member comprises spacers positioned between the first housing and the cable holder. Each such spacer includes a spacer support member supported on the cable holder, a movable space member for engagement with the first housing and a spacer spring interposed between the cable holder in the movable space. The spring urges the movable spacer member, under the bias of the spring, into engagement with the first housing in the cable holder into engagement with the second housing.

Figure 1 is a top perspective view of a particular form of the rotary connector of the subject invention.

Figure 2 is a perspective exploded view showing the structural components of the rotary connector of Figure 1, excluding electrical cables and internal electrical connectors for clarity purposes.

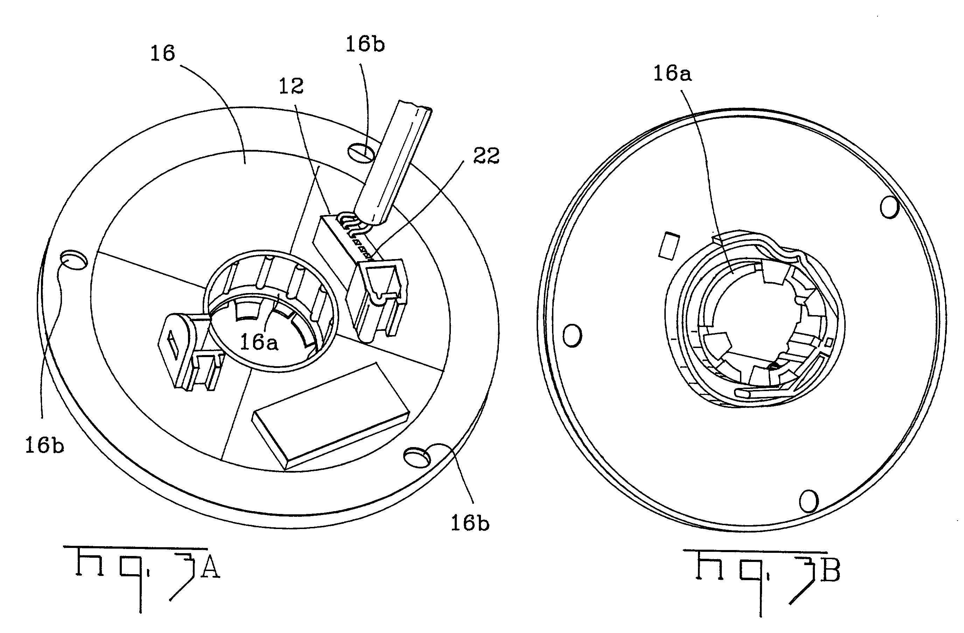

Figure 3(a) is a top perspective view of the rotor of the connector of Figure 1.

Figure 3(b) is a bottom perspective view of the rotor of Figure 3(a).

Figure 4 is a top perspective view of the connector of Figure 1 with the rotor removed to reveal the inner details of the stator and cable holder contained therewithin.

Figure 5 is an enlarged partial perspective view of the cable holder of Figure 4 showing in exploded fashion the construction of a spring biased spacer movably contained by the cable holder.

Figure 6 is a partial cross-sectional view of the rotary connector of Figure 1 shown along viewing lines VI-VI thereof.

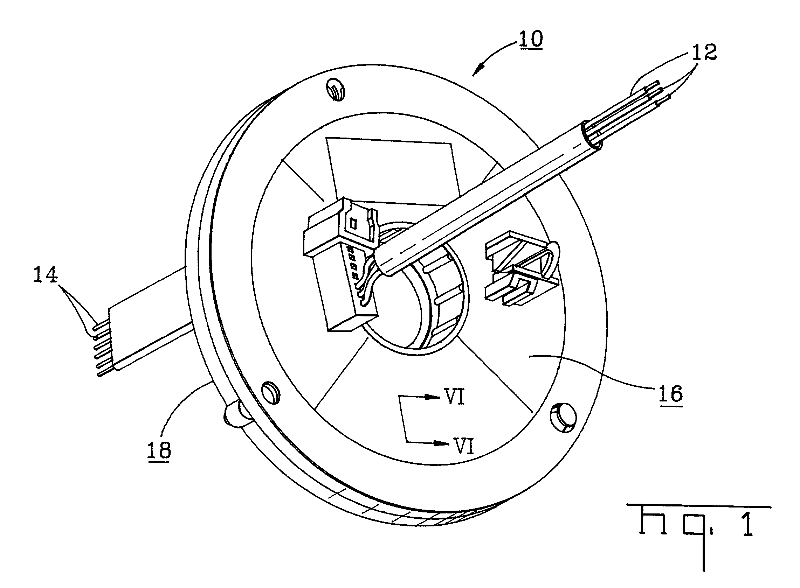

Referring now to the drawings, there is shown in Figure 1 a rotary loop back electrical connector 10. Connector 10 has particular applicability for use in an automobile steering wheel whereby electrical switches, or electronic circuit boxes, housed in the steering wheel may be electrically connected through cables 12 to electrical components contained in the automobile engine compartment and elsewhere in the automobile through conductors 14 disposed in a connector 15 having a layer of over-molded insulation. It should be appreciated that while electrical conductors 14 remain stationary with respect to the automobile steering column, cables 12 rotate with the turning of the automobile steering wheel. Such a rotary connector 10 may be used for establishing electrical connection to a deployable air bag mounted in the steering wheel, an audio system, automobile lights, heating devices in the steering wheel and any other automobile accessories that are electrically and/or electronically controlled.

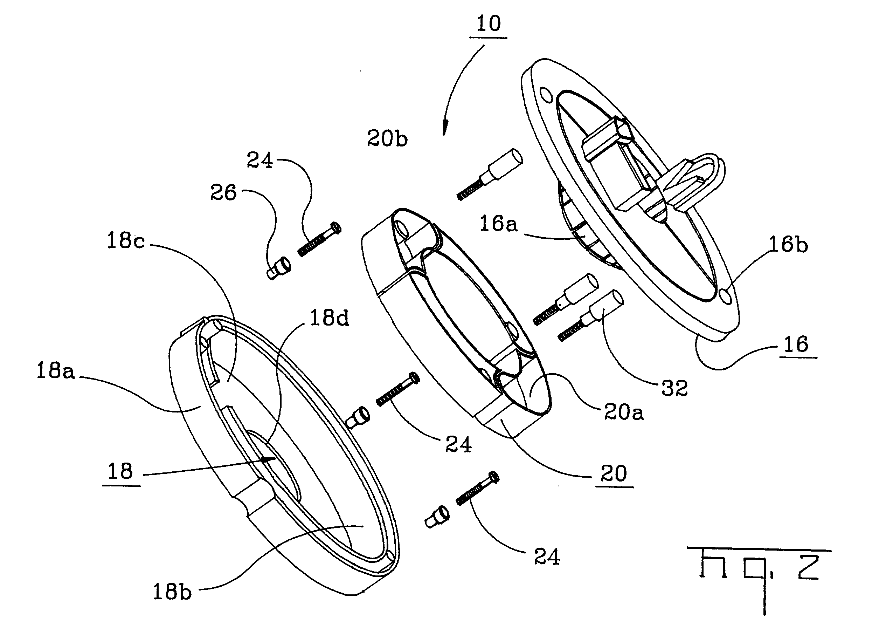

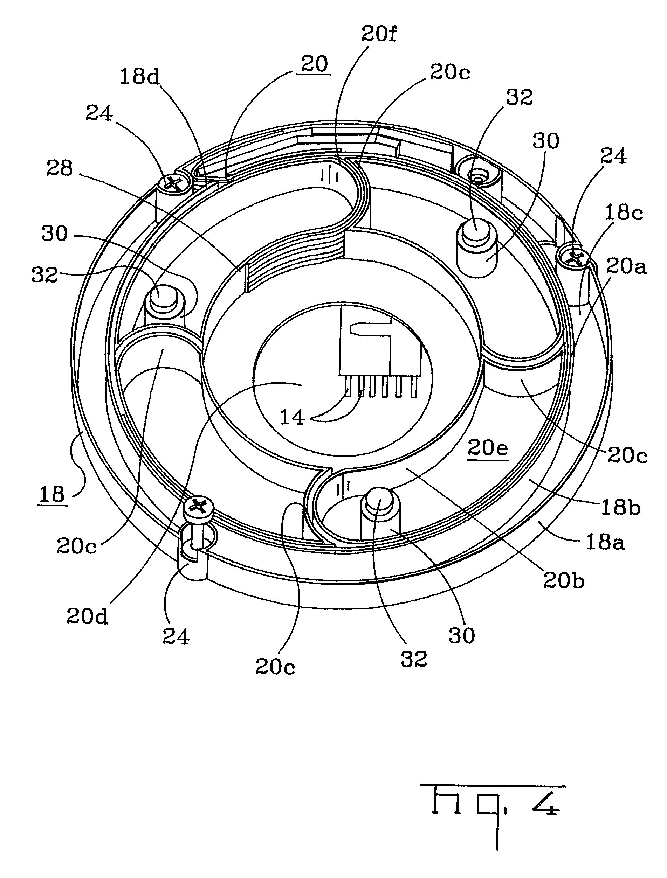

By reference also to Figure 2, it can be seen that the structural components of the connector comprise a first housing or rotor 16, a second housing or stator 18 and a cable holder 20. In the arrangement shown, each of the rotor 16, stator 18 and cable holder 20 are particularly formed to be generally circular, although it can be appreciated that other shapes of these components may be used. The rotor 16 includes a downwardly extending lip 16a which supports one end of a flat cable (Figure 4) that is connected to electrical cables 12 through a connector 22 supported on the upper surface of rotor 16. The rotor 16 includes a plurality of openings 16b through which a screwdriver, for example, may be used to attach the stator 18 to a steering column by screws 24. Suitable threaded locking bushings 26 may be used in conjunction with screws 24 for fixing the stator 18 to the steering column. In assembly, the downwardly extending lip 16a of the rotor 16 is rotatably movable with respect to the stator 18. In use in the automobile, the stator 18 is typically secured to the steering column in a fixed position while the rotor 16 is rotatably secured to the steering wheel for turning movement therewith.

By further reference to Figure 2 and also now to Figure 4, details of the cable holder 20 and its assembly within the stator 18 are described. Cable holder 20 includes an outer wall 20a and inner concentric wall 20b spaced radially within the outer wall 20a. Located around the cable holder 20 at approximately 90° intervals and between the outer wall 20a in the inner wall 20b are four arcuate connecting walls 20c. It should be appreciated that while four such arcuate connecting walls 20c are provided in this particular arrangement, different numbers of such walls may be suitably used. Cable holder 20 further includes an interior opening 20d for receipt therethrough of the downwardly extending rotor lip portion 16a.

A flat multiconductor cable 28 is supported by the cable holder 20 as shown in Figure 4. One end of the flat cable 28 is electrically connected to the cables 12 while the other end of the flat cable is connected to the conductors 14. A reversal or loop back of the cable 28 is provided by the arcuate connecting walls 20c in the cable holder 20. The cable holder 20 includes a bottom wall 20e supporting a plurality of wells 30, each of which contains a spring biased spacer 32 as will be described. In the particular arrangement shown, there are three spring biased spacers 32 provided, although more or less spacers 32 may be used.

The stator 18 includes an outer wall 18a, an inner wall 18b concentric with outer wall 18a and spaced radially inwardly therefrom, and a bottom wall 18c. The cable holder 20 with the flat electrical cable 28 therein is supported by the stator 18 for rotatable movement therebetween. The cable holder 20 includes an exit opening 20f through the outer wall 20a thereof and each of the arcuate connecting walls 20c. The inner stator wall 18b has an opening 18d through which the cable exiting the cable holder 20 is received for ultimate connection to the conductors 14. The stator 18 further includes an interior opening 18d for retentive receipt of the downwardly extending lip 16a of the rotor 16 by which the rotor 16 is movably secured to the stator 18.

In assembly, the stator 18 is affixed to the automobile steering column and will remain stationary upon rotation of the steering wheel. The rotor 16 rotates with the turning of the steering wheel. The cable holder 20, as a result of the looping disposition of the cable 28 therewithin, rotates with respect to both the stator 18 and the rotor 16.

It should be appreciated that since the cable holder 20 can freely move within the stator 18 and the rotor 16, movement of the cable holder 20, especially in the axial direction, may result. In fact, because of the dimensions and tolerances necessary to allow the required rotational movement, axial movement of the cable holder 20 between the stator 18 and rotor 16 on the order of +/- 1.6 mm may be experienced, and in some instances may be desired. Such movement may, however, result in vibratory rattling and audible noise during the operation of the automobile.

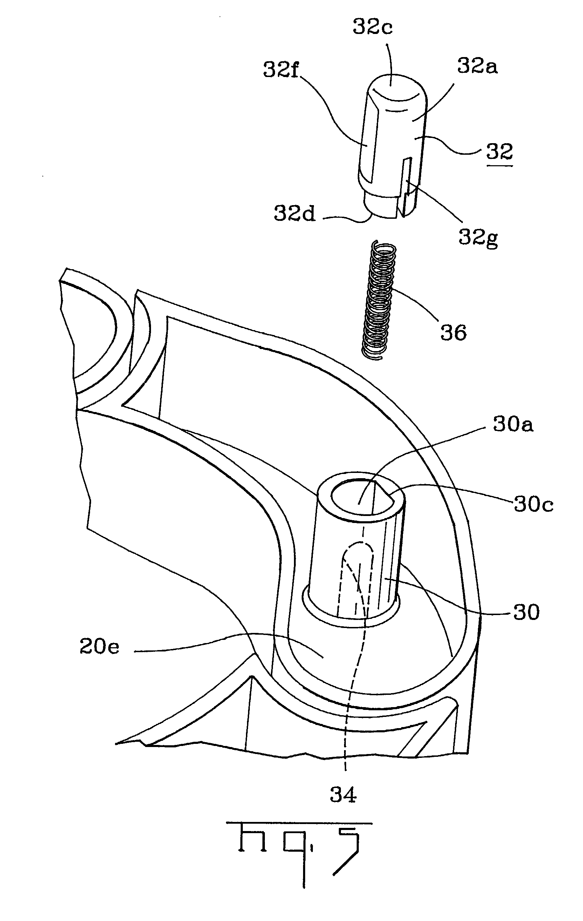

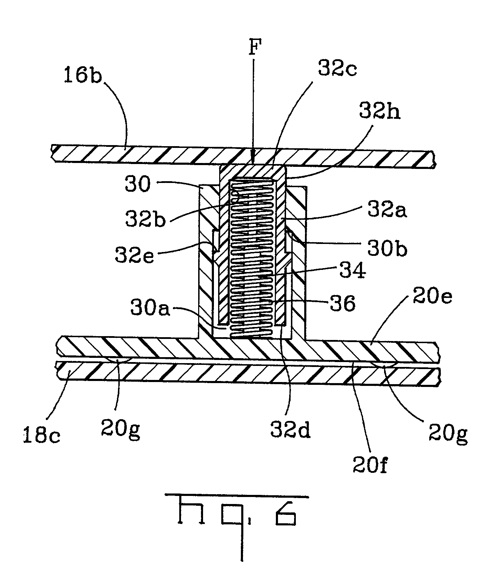

In accordance with an embodiment of the invention, the spring biased spacers 32 are provided to prevent vibratory movement of the cable holder 20 within the rotary connector 10. Referring now to Figures 5 and 6, the details of the spring biased spacers 32 are revealed. Each spacer 32 comprises a generally cylindrical body 32a, an interior enclosure 32b, a closed upper end 32c and an open lower end 32d communicating with the enclosure 32b. A flange 32e projects radially outwardly from the exterior surface of the body 32a. The upper surface of flange 32e is generally flat while the lower surface of the flange 32e is tapered at an oblique angle. Flange 32e may also be used to assist during product handling. As seen particularly in Figure 5, the cylindrical body 32a includes a substantially flat wall 32f on an exterior surface thereof and at least one longitudinally extending slot 32g extending through the wall of the cylindrical body 32a and communicating with the interior enclosure 32b.

The wells 30 are each supported on the floor 20e of the cable holder 20, each well 30 having a generally cylindrical cavity 30a of configuration complementary to the configuration of cylindrical body 32a for receipt of the spacers 32 respectively therein. Each well 30 includes an inner shoulder 30b for engagement with the upper surface of spacer flange 32e. Each well 30 is preferably configured to have an inner flat surface 30c formed in cavity 30a for complementary engagement with the flat surface 32f on the spacer 32a when the spacer is received within the well 30, to prevent relative rotational movement of the spacers 32 within the wells 30.

Supported on the bottom wall 20e of the cable holder 20 and projecting upwardly within the cavity 30a of each well 30, is a generally cylindrical, elongate post 34. Situated around post 34 and disposed within the interior enclosure 32b of each spacer 32 is a spring 36, preferably in helical form, although other spring configurations may be used. Helical spring 36 is of length to extend from engagement with the upper closed end 32c of the spacer 32 to engagement with the bottom wall 20e of the cable holder 20.

The spring biased spacers 32 are assembled as follows. The helical spring 36 is placed over the post 34 onto the floor 20e of the cable holder 20. The spacer 32 is inserted into the well cavity 30a such that the bottom tapered surface of the flange 32e exerts an inward radial force on the cylindrical body 32a. As a result of the slot 32g, the cylindrical body 32a will radially compress inwardly allowing the flange 32e to be received within the well cavity 30a. The flat surface of the spacer flange 32e will engage the well shoulder 30b thereby captivating the spacer 32 in the well 30. Upon captivation, the helical spring 36 will be axially compressed between the upper end 32c of the spacer 32 and the bottom wall 20e of the cable holder 20. An axial portion 32h of the spacer 32 will project upwardly beyond the upper end of the well 30 so that upon application of a downward force F (Figure 6) placed against the spacer closed end 32c, the helical spring 36 may be further biased, with the cylindrical spacer body 32 movable thereagainst.

In the assembly of the rotary connector 10, the operation of the spring biased spacers 32 is as follows. The movable rotor 16 engages the upper flat end 32c of each spacer 32 thereby exerting force F downwardly onto each spacer 32. Under the downward bias of the spring 36 against the bottom wall 20e of the cable holder 20, the cable holder is urged into engagement with the bottom wall 18c of the stator 18 and under such bias of spring 36, the cable holder 20 is maintained in contact therewith during movement of the cable holder 20 with respect to both the stator 28 and the rotor 16. As a result, axial movement of the cable holder 20 with respect to both the stator 18 and the rotor 16 is prevented and vibratory noise resulting therefrom is eliminated.

It should be appreciated that the spacers 32, in the preferred arrangement, are made preferably of a material having a substantially low coefficient of friction, such as syndiadactic polystyrene (SPS) and polytetrafluoroethylene. The bottom surface of rotor 16 may also be polished so as to provide a relatively smooth sliding contact with the upper flat end 32 of the spacers 32. The upper spacer end 32e may also be formed of other shapes, such as arcuate, so as to facilitate smooth movement with the bottom surface of rotor 16. In addition, the lower surface 20f (Figure 6) of the bottom wall 20e of the cable holder 20 may be formed to have polished buttons 20g spaced radially thereabout to provide substantially point contact engagement with the bottom wall 18c of the stator 18 so as further minimize friction and the resulting vibration and noise.
Having described the preferred embodiments of the invention herein, it should be appreciated that other variations may be made thereto without departing from the contemplated scope thereof. Accordingly, the preferred embodiments described herein are intended in an illustrative rather than a limiting sense. The true scope of the invention is set forth in the claims appended hereto.

## Claims

1. A rotary connector (10) comprising:
a first housing (16) and a second housing (18) defining a cable holding space therebetween, said first and second housings (16, 18) being relatively rotatable;
a cable holder (20) accommodated by said second housing (18) within said holding space, said cable holder (20) being movably positioned with respect to said second housing (18);
a flat cable (28) supported by said cable holder (20) within said holding space, said cable (28) having a first end fixed to said first housing (16) and a second end fixed to said second housing (18) for relative movement therebetween; and
spring biased spacers (32) positioned between said first housing (16) and cable holder (20) for urging said cable holder (20) against said second housing (18), and maintaining said cable holder (20) in movable contact therewith upon vibrating movement of said rotary connector (10)

2. A rotary connector (10) according to claim 1, wherein said spacers (32) each include a spacer support member (30) supported on said cable holder (20), a movable spacer member (32a) for engagement with said first housing (16) and a spacer spring (36) interposed between said cable holder (20) and said movable spacer member (32a) for urging said movable spacer member (32a), under the bias of said spring (36), into engagement with said first housing (16) and said cable holder (20) into engagement with said second housing (18).

3. A rotary connector (10) according to claim 2, wherein said movable spacer member (32a) comprises a substantially cylindrical body (32a) having an interior enclosure (32b) therein, an upper closed end (32c) for engaging said first housing (16) and a lower open end (32d) defining an opening for receipt of said spring (36) therethrough into said enclosure (32b).

4. A rotary connector (10) according to claim 3, wherein said body (32a) includes at least one slot (32g) extending longitudinally through the wall of said body (32a) into said enclosure (32b).

5. A rotary connector (10) according to claim 4, wherein said body (32a) comprises a flange (32e) projecting outwardly from said outer surface of said body (32a) to engage said cable holder (20).

6. A rotary connector (10) according to claim 5, wherein said cable holder (20) includes a well (30) for receipt of each of said movable spacer members (32), said wells (30) each having a substantially cylindrical cavity (30a) for respective receipt of said bodies (32a).

7. A rotary connector (10) according to claim 6, wherein the inner surface of each well (30) includes a shoulder (30b) for respective engagement with the flange (32e) on each body (32a).

8. A rotary connector (10) according to claim 7, wherein each body (32a) is formed to be received in a respective well (30) in a flexible manner, whereby upon receipt of a body (32a) in a well said body is radially compressed about the longitudinally extending body slot (32g).

9. A rotary connector (10) according to claim 8, wherein each body (32a) is formed to have a flat portion (32f) on its outer surface thereof and wherein the inner surface of each well (30) is formed to have a flat portion (30c) for complementary engagement with the flat surface (32f) of said body (32c) to prevent relative rotational movement therebetween.

10. A rotary connector (10) according to claim 6, wherein said each spacer support member (30) comprises a post (34) disposed in each well cavity (30a), said posts (34) being generally elongate and projecting upwardly toward said first housing (16) and upwardly into the respective body enclosures (32b).

11. A rotary connector (10) according to claim 10, wherein each said spacer spring (36) comprises a helical spring disposed on a respective pin (34) and received within a respective body enclosure (32b).

12. A rotary connector (10) comprising:
a first housing (16) and a second housing (18) defining a cable holding space therebetween, said first and second housings (16, 18) being relatively rotatable;
a cable holder (20) accommodated within said holding space, said cable holder (20) being movably positioned with respect to said second housing (18);
a flat cable (28) supported by said cable holder (20) within said holding space, said cable (28) having a first end fixed to said first housing (16) and a second end fixed to said second housing (18) for relative movement therebetween; and
at least one spring biased member movably supported by said cable holder (20), said spring biased member (32a) engaging said first housing (16) and urging said cable holder (20) against said second housing (18) to maintain said cable holder (20) in movable contact therewith upon vibrating movement of said rotary connector (10).

13. A rotary connector (10) according to claim 12, wherein said spring biased member comprises a spring in engagement with said cable holder (20).

14. A rotary connector according to claim 13, wherein said spring biased member comprises a movable spacer member (32) having an outer surface engaging said first housing (16), said spacer member (32) including a spring engagement surface engaging said spring (36) in a direction opposite said cable holder (20).

15. A rotary connector (10) according to claim 14, wherein said spacer member (32) comprises a substantially cylindrical body (32a) having an enclosure (32b) therein, said enclosure (32b) receiving said spring (36) therein and including an inner surface defining said spring engagement surface.

16. A rotary connector (10) according to claim 15, wherein said cable holder (20) includes a well (30) for movably retaining said cylindrical body (32a).

17. A rotary connector (10) according to claim 16, wherein said well (30) and said cylindrical body (32a) comprise cooperative engagement surfaces for flexibly receiving said body (32a) within said well (30) for captive movement therebetween.

18. A rotary connector (10) according to claim 17, wherein said cylindrical body (32a) comprises a relatively smooth surface engaging said first housing (16).

19. A rotary connector (10) according to claim 18, wherein said cable holder (20) includes a lower surface (20f) facing said second housing (18), said lower surface (20f) including thereon a plurality of relatively smooth contact buttons (20g) engaging said second housing (18).

20. A rotary connector (10) according to claim 18, wherein said cylindrical body (32a) is formed of a material having a relatively low coefficient of friction.
